# EUROPÄISCHE PATENTSCHRIFT

(11) **EP 3 808 995 B1**
(45) Veröffentlichungstag und Bekanntmachung des Hinweises auf die Patenterteilung: **06.09.2023**
(21) Anmeldenummer: 20202370.1
(22) Anmeldetag: 16.10.2020
(51) Int. Cl.: F16B 2/00, B32B 5/00, F16B 11/00, F16B 4/00, F16D 1/00

(54) **SCHICHTANORDNUNG ZUR REIBUNGSERHÖHENDEN VERBINDUNG**
LAYER ASSEMBLY FOR FRICTION-INCREASING CONNECTION
SYSTÈME DE COUCHE POUR LA LIAISON À AUGMENTATION DE FRICTION

(30) Priorität: 17.10.2019 DE 102019128085
(43) Veröffentlichungstag der Anmeldung: 21.04.2021
(73) Patentinhaber: CCT Composite Coating Services GmbH, 70191 Stuttgart (DE)
(72) Erfinder: KURRLE, Matthias, 70186 Stuttgart (DE)
(74) Vertreter: RDL Patentanwälte PartG mbB

(56) Entgegenhaltungen:
- EP-B1- 0 961 038
- DE-A1-102013 107 347
- DE-A1-102013 113 616

## Beschreibung

Die Erfindung betrifft eine Schichtanordnung, insbesondere eine Schichtanordnung zur reibungserhöhenden Verbindung von Bauteilen.

Bei Verbindungen von Bauteilen und insbesondere bei Reibschlussverbindungen besteht die Gefahr des Durchrutschens, also einer unerwünschten Relativbewegung zwischen den Bauteilen. Bei einer Drehmomentbeanspruchung einer Welle-Nabe-Verbindung kann es beispielsweise zu einem Durchrutschen kommen, wenn die Reibungskräfte zwischen den gefügten Bauteilen nicht mehr ausreichen, um eine Relativbewegung zwischen der Welle und der Nabe zu verhindern. Auch bei einer Scherbeanspruchung einer Klemmverbindung kann es zu einer ungewollten Relativbewegung kommen.

Zur Erhöhung der Stabilität der Verbindung kann eine reibwerterhöhende Folie zwischen die zu fügenden Bauteile platziert werden, welche Folie Hartstoffpartikel wie Diamanten aufweist. Solche folienartigen Verbindungselemente zur reibungserhöhenden bzw. reibwerterhöhenden Verbindung von Bauteilen werden beispielsweise im Automobilbereich und in der Antriebstechnik in großer Stückzahl eingesetzt, um die Reibung zwischen zu fügenden Bauteilen, beispielsweise in Stirnpressverbindungen, zu erhöhen und eine sichere, kraftschlüssige bzw. mikroformschlüssige Verbindung zu ermöglichen. Derartige Verbindungselemente enthalten Hartstoffpartikel, die teilweise an den Oberflächen der Verbindungselemente herausragen und bei Überschreitung einer Mindestflächenpressung in die jeweiligen Flächen der zu fügenden Bauteile eindringen und dadurch eine Mikroverzahnung bewirken. Der Haftbeiwert (Haftkoeffizient) kann so erhöht werden, beispielsweise um einen Faktor 2. Hierdurch können größere Kräfte übertragen werden, und die Gefahr des Durchrutschens wird verringert.

Die EP 0 961 038 B1 zeigt eine dünne flexible, federelastische Folie, bevorzugt ein Band aus metallischem Material, insbesondere kaltgewalztem Federband bzw. unlegiertem Federbandstahl. Das metallische Material soll mindestens so hart sein wie die zu fügenden Bauteile, und hierfür ist im Wesentlichen nur Stahl geeignet. Eine Hartstoff-Metallschicht ist galvanotechnisch oder chemisch mit dem Band aus metallischem Material verbunden.

Die EP 1 564 418 A1 zeigt eine mit einer metallischen Bindephase und Hartstoffpartikeln beschichtete Metallfolie mit plastisch-elastischen Eigenschaften. Als metallische Bindephase wird bevorzugt chemisches Nickel-Phosphor verwendet. Die Eigenfestigkeit der beschichteten Metallfolie ist so hoch wie die Eigenfestigkeit der zu fügenden Werkstücke. Das Material ist ein Federstahl des Typs C 75 oder Ck 75. Die zu fügenden Bauteile werden mit einer Flächenpressung von 100 MPa verpresst.

Die WO 2015/082365 A1 zeigt eine Schichtanordnung zur Verbindung von Bauteilen, bei der ein Substrat einen Grundkörper aus einem organischen Polymer hat, und auf dem Substrat ist eine Funktionsschicht mit Hartstoffpartikeln vorgesehen.

Die US 4 980 241 A zeigt zwei Zwischenschichten, die an ihrer Kontaktstelle einen niedrigen Reibungskoeffizienten haben und dadurch eine Relativbewegung zweier Bauteile ermöglichen, um so die Gefahr von Passungsrost zu verringern.

Die DE 10 2013 113 616 A1 zeigt eine Schichtanordnung zur reibungserhöhenden Verbindung von zu fügenden Bauteilen mit einem Grundkörper aus einem organischen Polymer.

Die DE 10 2014 208 226 A1 zeigt ein Kontaktelement für eine elektrische Verbindung.

Die DE 43 22 54 C1 zeigt ein Sägeblatt mit Bornitridpartikeln.

Die DE 10 2013 107 347 A1 zeigt ein Konstruktionselement mit einem Metallsubstrat aus einer kupferhaltigen Aluminiumlegierung oder einer Bronzelegierung (CuSn6), auf welchem eine Beschichtung mit einer Nickel-Funktionsschicht und darin enthaltenen Hartstoffpartikeln vorgesehen ist. Das Metallsubstrat hat eine Dicke von 0,2 mm, und die Funktionsschicht hat eine Dicke von 7 *µ*m.

Es ist eine Aufgabe der Erfindung, eine neue Schichtanordnung zur reibungserhöhenden Verbindung und eine neue Anordnung mit einer solchen Schichtanordnung bereit zu stellen.

Diese Aufgabe wird gelöst durch den Gegenstand des Anspruchs 1.

Eine Schichtanordnung zur reibungserhöhenden Verbindung von zu fügenden Bauteilen weist auf:
Ein Metallsubstrat aus Kupfer oder Nickel oder einer Nickellegierung;
und mindestens zwei mit dem Metallsubstrat verbundene Funktionsschichten mit einer metallischen Bindephase und in der metallischen Bindephase fixierten Hartstoffpartikeln.

Die Verwendung einer solchen Schichtanordnung mit einem Substrat, welches einen Grundkörper aus Kupfer, Nickel oder einer Nickellegierung aufweist, hat sich als vorteilhaft erwiesen. Zum einen sind das Eigenspannungsverhalten und die Duktilität der genannten Werkstoffe und damit auch der gesamten Schichtanordnung vorteilhaft gegenüber dem Eigenspannungsverhalten und der Duktilität von Stahl bzw. Federstahl. Dies ermöglicht eine Fügung der Bauteile mit einer geringeren Flächenpressung, als sie bei Stahl verwendet wird. Bei Federstahlfolien ist eine Mindestpressung erforderlich, um ein Anliegen der zu fügenden Bauteile mit der dazwischen angeordneten Folie zu bewirken. Wenn die Pressung zu gering ist, kann es zu einem Fügespalt und damit zu einem Spiel zwischen den Bauteilen kommen, da die Folie auf Grund der Eigenspannung nicht überall an den Bauteilen anliegt. Insbesondere bei kleinen zu fügenden Bauteilen wie beispielsweise einer Welle mit 5 mm Durchmesser ist es vorteilhaft, wenn eine vergleichsweise geringe Flächenpressung relativ zur Nabe verwendet werden kann. Hier haben sich in Versuchen die genannten Materialien als besser geeignet erwiesen als Stahl bzw. Federstahl, die als Hauptbestandteil Eisen aufweisen. Durch die höhere Duktilität der Schichtanordnung können zudem Unebenheiten der zu fügenden Bauteile besser ausgeglichen werden. Dies führt zu einer qualitativ besseren Verbindung zwischen den zu fügenden Bauteilen. Bei gleicher Flächenpressung ist mit dem Grundkörper aus Kupfer, Nickel oder deren Legierungen ein geringerer Fügespalt möglich als mit einem Grundkörper aus Federstahl, und dies führt ebenfalls zu einer Verringerung der Korrosion.

Gemäß der Erfindung ist die Schichtanordnung dazu ausgebildet, eine reibungserhöhende Verbindung von zu fügenden Bauteilen zu bewirken. Dies ist durch das Metallsubstrat mit den durch die Funktionsschicht verbundenen Hartstoffpartikeln möglich.

Gemäß einer bevorzugten Ausführungsform weist das Metallsubstrat einen Werkstoff mit einer Vickershärte auf, welche im Bereich 150 HV 0,1 bis 900 HV 0,1 liegt, bevorzugt im Bereich 180 HV 0,1 bis 650 HV 0,1, weiter bevorzugt im Bereich 190 HV 0,1 bis 500 HV 0,1. Schichtanordnungen mit solchen Härten lassen sich sowohl gut handhaben als auch gut bei unebenen Montageflächen verwenden.

Gemäß einer bevorzugten Ausführungsform besteht das Metallsubstrat aus Kupfer, und das Metallsubstrat weist eine Vickershärte auf, welche im Bereich 150 HV 0,1 bis 250 HV 0,1 liegt. Diese Härten sind bei Kupfer positiv für die Handhabung der Schichtanordnung.

Gemäß einer bevorzugten Ausführungsform besteht das Metallsubstrat aus Nickel oder aus einer Nickellegierung, und das Metallsubstrat weist eine Vickershärte auf, welche im Bereich 180 HV 0,1 bis 900 HV 0,1 liegt. Diese Härten sind bei Nickel bzw. Nickellegierungen positiv für die Handhabung der Schichtanordnung.

Gemäß einer bevorzugten Ausführungsform weist das Metallsubstrat eine Dicke auf, welche mindestens 10 *µ*m beträgt, bevorzugt mindesten 15 *µ*m, weiter bevorzugt mindestens 50 *µ*m, weiter bevorzugt mindestens 80 *µ*m und besonders bevorzugt mindestens 100 *µ*m. Derartige Schichtanordnungen lassen sich gut verarbeiten und führen zu einer guten reibungserhöhenden Wirkung.

Gemäß einer bevorzugten Ausführungsform weist das Metallsubstrat eine Dicke auf, welche höchstens 40 mm beträgt, bevorzugt höchstens 15 mm, weiter bevorzugt höchstens 10 mm, weiter bevorzugt höchstens 1.000 *µ*m, besonders bevorzugt höchstens 500 *µ*m. In diesen Bereichen sind die Schichtanordnungen von der Masse her handhabbar, und sie ergeben eine gute reibungserhöhende Wirkung sowie einen guten Halt für die Funktionsschichten.

Gemäß einer bevorzugten Ausführungsform stehen die Hartstoffpartikel zumindest teilweise aus der metallischen Bindephase hervor, und die Schichtanordnung weist ohne den hervorstehenden Bereich der Hartstoffpartikel eine Dicke auf, welche im Bereich 15 *µ*m bis 40 mm liegt, bevorzugt im Bereich 15 *µ*m bis 15 mm. In Abhängigkeit von der Größe der zu fügenden Bauteile kann eine geeignete Dicke gewählt werden und hierdurch eine gute reibungserhöhende Wirkung erzielt werden.

Gemäß einer bevorzugten Ausführungsform weist das Basismetall des Metallsubstrats einen Pauling-Wert der Elektronegativität auf, welcher im Bereich 1,85 bis 2,20 liegt, bevorzugt im Bereich 1,87 bis 2,00. Dieser Pauling-Wert ist höher als der von Eisen, und das Basismetall ist daher edler. Dies führt zu einer verringerten Korrosion im Bereich der Schichtanordnung.

Gemäß einer bevorzugten Ausführungsform ist die metallische Bindephase aus einem Werkstoff ausgebildet, welcher ausgewählt ist aus der Gruppe bestehend aus
- Nickel,
- Nickellegierung,
- Kupfer,
- Kupferlegierung,
- Zinn, und
- Zinnlegierung.

Diese Werkstoffe eignen sich gut in Kombination mit den Werkstoffen des Metallsubstrats, und sie haben ähnliche elektronegative Eigenschaften. Zudem eignen sich die genannten Werkstoffe gut für die Einbettung von Feststoffpartikeln.

Gemäß einer bevorzugten Ausführungsform weist die metallische Bindephase eine Nickellegierung auf, welche als Bestandteile Nickel und Phosphor enthält. Nickel und Phosphor ergeben zusammen gute physikalische Eigenschaften, und es sind hohe Härten erzielbar.

Gemäß einer bevorzugten Ausführungsform sind zwei der mindestens zwei Funktionsschichten auf gegenüberliegenden Seiten der Schichtanordnung vorgesehen, insbesondere an den flächigen Seiten. Sie können aber alternativ oder zusätzlich an weiteren Seiten vorgesehen sein. Die mindestens zwei Seiten können mit unterschiedlichen zu fügenden Bauteilen zusammenwirken, oder aber auch mit unterschiedlichen Flächen mindestens eines nicht ebenen Bauteils. Es können auch alle Seiten der Schichtanordnung mit einer Funktionsschicht versehen sein.

Die Dicke des Metallsubstrats beträgt mindestens 50 % der Dicke der gesamten Schichtanordnung (ohne den hervorstehenden Bereich der Hartstoffpartikel), weiter bevorzugt mindestens 60 % und besonders bevorzugt mindestens 70 %. Das Metallsubstrat ergibt hierdurch eine gute tragende Wirkung, und die Schichtanordnung ist stabil.

Gemäß einer bevorzugten Ausführungsform ist mindestens eine der mindestens zwei mit dem Metallsubstrat verbundenen Funktionsschichten direkt in Kontakt mit dem Metallsubstrat. Es sind also keine weiteren Zwischenschichten vorgesehen, sondern die Funktionsschicht wird direkt am Metallsubstrat vorgesehen. Hierdurch ergibt sich ein guter Kontakt zwischen den Schichten.

Die Erfindung wird auch gelöst durch den Gegenstand des Anspruchs 13.

Eine Anordnung mit einem ersten Bauteil, einem zweiten Bauteil und einer Schichtanordnung ist vorgesehen, und das erste Bauteil ist über die Schichtanordnung mit dem zweiten Bauteil verbunden. Durch eine solche Anordnung können sicher Kräfte und Momente zwischen den Bauteilen übertragen werden.

Gemäß einer bevorzugten Ausführungsform liegt eine erste Fläche des ersten Bauteils an der Schichtanordnung an, eine zweite Fläche des zweiten Bauteils liegt an der Schichtanordnung an, und die der ersten Fläche zugeordnete Bindephase hat eine geringere Vickershärte als das Material der ersten Fläche. Hierdurch kann sich die Bindephase relativ zum Bauteil besser verformen, und die Gefahr einer Beschädigung des Bauteils beim Fügen wird verringert.

Gemäß einer bevorzugten Ausführungsform ist der Anpressdruck zwischen der ersten Fläche und der Schichtanordnung kleiner als 48 MPa, bevorzugt kleiner als 45 MPa. Ein solcher Anpressdruck ist beispielsweise für kleinere zu fügende Bauteile gut geeignet, und die Gefahr einer Verformung durch den Anpressdruck wird verringert.

Gemäß einer bevorzugten Ausführungsform ist die Duktilität des Werkstoffs des Metallsubstrats größer als die Duktilität des Werkstoffs des ersten Bauteils an der ersten Fläche. Hierdurch wird eine Verformbarkeit der Schichtanordnung zur Anpassung an Unebenheiten erleichtert.

Weitere Einzelheiten und vorteilhafte Weiterbildungen der Erfindung ergeben sich aus dem im Folgenden beschriebenen und in der Zeichnung dargestellten, in keiner Weise als Einschränkung der Erfindung zu verstehenden Ausführungsbeispiel, sowie aus den Unteransprüchen. Es zeigt:
- Fig. 1: eine Schichtanordnung zur reibungserhöhenden Verbindung von zu fügenden Bauteilen,
- Fig. 2: eine Anordnung mit zwei Bauteilen mit einer gezackten Kontur und der Schichtanordnung von Fig. 1 vor einem Fügevorgang,
- Fig. 3: die Anordnung von Fig. 2 nach einem Fügevorgang,
- Fig. 4: eine Anordnung mit zwei Bauteilen mit einem Vorsprung und einer Vertiefung und der Schichtanordnung von Fig. 1 vor einem Fügevorgang,
- Fig. 5: die Anordnung von Fig. 4 nach einem Fügevorgang,
- Fig. 6: in einer schematischen Schnittdarstellung die Schichtanordnung von Fig. 1 vor einem Fügevorgang,
- Fig. 7: in einer schematischen Schnittdarstellung entsprechend Fig. 6 die Schichtanordnung beim Fügevorgang mit einem ersten Anpressdruck,
- Fig. 8: in einer schematischen Schnittdarstellung entsprechend Fig. 6 die Schichtanordnung beim Fügevorgang mit einem zweiten Anpressdruck, welcher größer ist als der erste Anpressdruck,
- Fig. 9: in einer schematischen Schnittdarstellung entsprechend Fig. 6 die Schichtanordnung beim Fügevorgang mit einem dritten Anpressdruck, welcher größer ist als der zweite Anpressdruck,
- Fig. 10: in einer schematischen Schnittdarstellung die Schichtanordnung von Fig. 1 mit einem unebenen Bauteil vor einem Fügevorgang,
- Fig. 11: in einer Darstellung entsprechend Fig. 10 die Schichtanordnung nach einem Fügevorgang, und
- Fig. 12: in einer Draufsicht eine ringförmige Scheibe mit einer Schichtanordnung von Fig. 1.

Gleiche und gleich wirkende Teile haben die gleichen Bezugszeichen und werden üblicherweise nur einmal beschrieben. Die Figurenbeschreibung baut aufeinander auf.

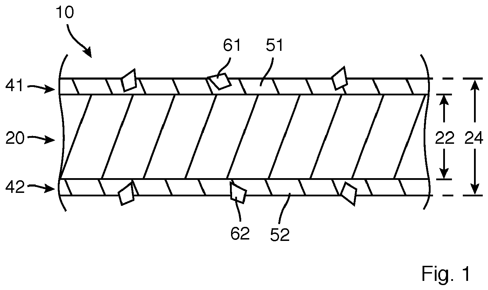

**Fig. 1** zeigt eine Schichtanordnung 10 zur reibungserhöhenden Verbindung von zu fügenden Bauteilen. Die Schichtanordnung 10 hat ein Metallsubstrat 20, eine mit dem Metallsubstrat 20 verbundene Funktionsschicht 41 und eine mit dem Metallsubstrat 20 verbundene Funktionsschicht 42. Die Funktionsschicht 42 ist auf der der Funktionsschicht 41 gegenüber liegenden Seite vorgesehen.

Das Metallsubstrat 20 ist aus Kupfer, Nickel oder einer Nickellegierung ausgebildet. Eine Nickellegierung ist eine Legierung mit dem Basismetall Nickel und mindestens einem weiteren Legierungselement. Auch bei weitgehend reinem Kupfer und Nickel kann von einem Basismetall Kupfer bzw. Nickel gesprochen werden.

Die Funktionsschichten 41, 42 weisen eine metallische Bindephase 51, 52 und in der metallischen Bindephase 51, 52 fixierte Hartstoffpartikel 61, 62 auf. Die Hartstoffpartikel 61, 62 haben im Bereich der Funktionsschichten 41, 42 beispielsweise eine Belegungsdichte von 12 ± 4 %. Die Belegungsdichte bezeichnet die Fläche der Hartstoffpartikel 61, 62 relativ zur Gesamtfläche der Funktionsschicht 41 bzw. 42. Es sind auch andere Belegungsdichten möglich, beispielsweise 8 % oder 30 %. Die mindestens eine Funktionsschicht 41, 42 wird bevorzugt auf dem Metallsubstrat 20 durch chemische oder galvanische Beschichtung gebildet, wobei die Hartstoffpartikel bei der Beschichtung als Bestandteil des Bads auf das zu beschichtende Metallsubstrat 20 gelangen.

Das Metallsubstrat 20 hat bevorzugt eine Vickershärte, welche im Bereich 150 HV bis 900 HV liegt, bevorzugt im Bereich 180 HV bis 650 HV, weiter bevorzugt im Bereich 190 HV bis 500 HV. Die Vickershärte wird als HV 0,1 gemessen. Der Wert 0,1 bezeichnet die Prüfkraft, die 100 Pond bzw. 0,9807 N beträgt.

Bei einer Ausbildung des Metallsubstrats 20 aus Kupfer hat dieses bevorzugt eine Vickershärte im Bereich 150 HV bis 250 HV.

Bei einer Ausbildung des Metallsubstrats 20 aus Nickel oder aus einer Nickellegierung wird bevorzugt durch entsprechende Legierungspartner und/oder durch Wärmebehandlung eine Vickershärte im Bereich 180 HV bis 900 HV erzeugt. Eine geeignete Nickellegierung ist beispielsweise Nickelphosphor, ggf. mit einem der zusätzlichen Legierungspartner wie Chrom oder Kupfer. Nickelphosphor hat gute Korrosionseigenschaften.

Bevorzugt beträgt die Dicke 22 des Metallsubstrats 20 mindestens 10 *µ*m, weiter bevorzugt mindesten 15 *µ*m, weiter bevorzugt mindestens 50 *µ*m, weiter bevorzugt mindestens 80 *µ*m und besonders bevorzugt mindestens 100 *µ*m. Bei sehr dünnen Metallsubstraten 20 ist das Handling schwierig. Metallsubstrate 20 mit 80 *µ*m, 100 *µ*m, 200 *µ*m oder dicker lassen sich dagegen gut verarbeiten.

Bevorzugt beträgt die Dicke 22 des Metallsubstrats 20 höchstens 40 mm, weiter bevorzugt höchstens 15 mm, weiter bevorzugt höchstens 10 mm, weiter bevorzugt höchstens 1.000 *µ*m, weiter bevorzugt höchstens 500 *µ*m. Große Dicken 22 können beispielsweise als Reibscheiben bei Magnetkupplungen oder Bremsscheiben eingesetzt werden. Es besteht keine grundsätzliche technische Grenze für die maximale Dicke 22.

Die Dicke der metallischen Bindephasen 51, 52 liegt bevorzugt jeweils im Bereich 5 *µ*m bis 50 *µ*m.

Die Hartstoffpartikel 61, 62 stehen im Ausführungsbeispiel zumindest teilweise aus der metallischen Bindephase 51, 52 hervor, und die Schichtanordnung 10 hat bevorzugt ohne den hervorstehenden Bereich der Hartstoffpartikel 61, 62 eine Dicke 24 im Bereich zwischen 20 *µ*m bis 15 mm.

Das Basismetall des Metallsubstrats 20 hat bevorzugt einen Pauling-Wert der Elektronegativität im Bereich 1,85 bis 2,20, weiter bevorzugt im Bereich 1,87 bis 2,00. Man spricht auch von der Elektronegativität in der Pauling-Skala. Eisen hat bspw. einen Pauling-Wert von circa 1,83, Nickel einen Pauling-Wert von 1,91 und Kupfer einen Pauling-Wert von 1,9. Das Metallsubstrat 20 ist somit aus einem edleren Werkstoff als bspw. Federstahl, und hierdurch wird die Gefahr von Korrosion im Bereich des Metallsubstrats 20 verringert. Kupfer wird auch als Halbedelmetall bezeichnet.

Bevorzugt besteht die metallische Bindephase 51, 52 aus Nickel oder aus einer Nickellegierung. Als Nickellegierung ist bspw. eine Legierung geeignet, welche als Bestandteile Nickel und Phosphor enthält.

Für die Hartstoffpartikel 61, 62 (engl. Hartstoffe: hard materials bzw. super hard materials) eignen sich z.B. einer oder mehrere der folgenden Hartstoffe:
- Diamant
- Nitride, z.B. kubisches Bornitrid oder Siliciumnitrid
- Carbide, z. B. Borcarbid, Wolframcarbid, Siliciumcarbid, Titancarbid, Tantalcarbid
- Boride, z. B. Titanborid
- Oxide wie z. B. Aluminiumoxid, Zirconiumdioxid

In Römpps Chemie-Lexikon werden als Hartstoffe auch Carbonitride, Silicide und andere Werkstoffe genannt.

Die Hartstoffpartikel 61, 62 haben bevorzugt eine mittlere Größe, die im Bereich von 10 µm bis 60 µm liegt, weiter bevorzugt im Bereich von 10 *µ*m bis 40 *µ*m. In Abhängigkeit vom Anwendungsfall können aber auch kleinere oder größere mittlere Größen eingesetzt werden. Viele Hartstoffpartikel sind mit vorgegebenen mittleren Größen und geringen Toleranzen erhältlich. Der Flächenanteil der Hartstoffpartikel 61, 62 pro Flächenanteil der Funktionsschicht 41, 42 darf nicht zu gering sein, da ansonsten im Beanspruchungsfall die auf das einzelne Partikel wirkenden Kräfte so groß werden können, dass dieses aus der Bindephase ausbricht. Der Anteil darf allerdings auch nicht zu groß sein, da ansonsten ggf. die Normalkraft beim Fügen der Bauteile nicht groß genug ist, um ein Eindrücken der Hartstoffpartikel 61, 62 in die Bauteile zu ermöglichen. Abhängig vom Anwendungsfall ist z.B. eine Abdeckung der Oberfläche der Funktionsschicht von 10 % bis 30 % durch die Hartstoffpartikel 61, 62 geeignet.

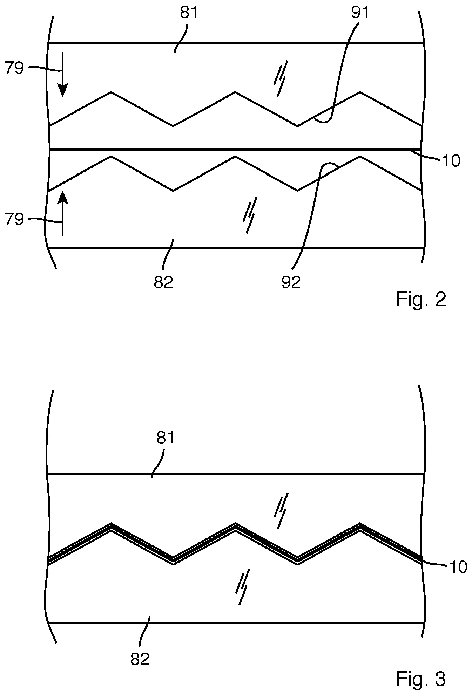

**Fig. 2** zeigt zwei zu fügende Bauteile 81, 82 mit einer zwischen diesen vorgesehenen Schichtanordnung 10. Die Schichtanordnung 10 ist weitgehend eben. Die Bauteile 81, 82 werden aufeinander zu bewegt, wie dies durch die Pfeile 79 angedeutet ist. Hierdurch bewegen sich eine erste Fläche 91 des Bauteils 81 und eine zweite Fläche 92 des Bauteils 82 aufeinander zu und gelangen in Kontakt mit der Schichtanordnung 10.

**Fig. 3** zeigt die Bauteile 81, 82 im gefügten Zustand. Die Bauteile 81, 82 haben eine gezackte Kontur, welche eine zusätzliche Verzahnung ermöglicht. Ein Vorteil des beispielsweise im Vergleich zu Federstahl weicheren und weniger spröden Substratmaterials ist, dass sich die Schichtanordnung 10 vergleichsweise gut an die Kontur der zu fügenden Bauteile 81, 82 durch Verformung anpassen kann. Der Verformung sind naturgemäß Grenzen gesetzt, die insbesondere abhängig sind vom Substratmaterial und von der Dicke der Schichtanordnung 10. Auch beim Auftreten von Rissen in der Schichtanordnung 10 kann eine gute Reibwerterhöhung gegeben sein. Auf Grund der Gefahr eines Austretens von kleinen Teilen der Schichtanordnung wird jedoch bevorzugt ein Reißen der Schichtanordnung 10 vermieden, beispielsweise durch Anpassung der Unebenheiten bzw. Vorsprünge an die maximale Verformbarkeit der Schichtanordnung 10.

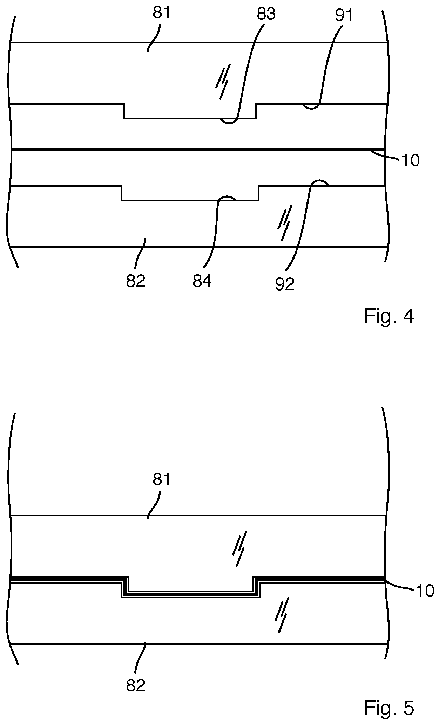

**Fig. 4** zeigt ein weiteres Ausführungsbeispiel zweier zu fügender Bauteile 81, 82, wobei das Bauteil 81 einen Vorsprung 83 aufweist, und das Bauteil 82 eine zugeordnete Vertiefung 84. Die Schichtanordnung 10 kann vor dem Fügen zwischen den Bauteilen 81, 82 positioniert werden.

**Fig. 5** zeigt die Bauteile 81, 82 im gefügten Zustand. Die Schichtanordnung 10 hat sich an die Kontur der Bauteile 81, 82 angepasst. Bevorzugt ist zwischen der Schichtanordnung 10 und dem jeweiligen Bauteil 81, 82 zumindest lokal kein Fügespalt vorhanden, und dies führ zu einer Reduzierung der Korrosionsgefahr.

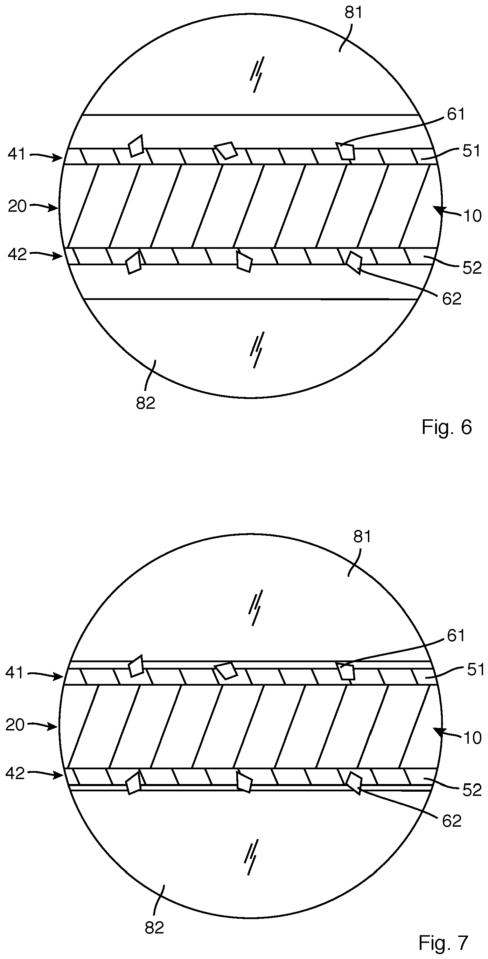

**Fig. 6** zeigt eine mikroskopische Betrachtung des Fügevorgangs zweier Bauteile 81, 82 mit einer zwischen den Bauteilen 81, 82 vorgesehenen Schichtanordnung 10. Es ist zu sehen, dass die Hartstoffpartikel 61, 62 teilweise aus der metallischen Bindephase 51, 52 hervorstehen. Die Bauteile 81, 82 haben noch keinen Kontakt zur Schichtanordnung 10.

**Fig. 7** zeigt den Fügevorgang von Fig. 6, wobei die Bauteile 81, 82 so weit zusammen bewegt sind, dass die Hartstoffpartikel 61, 62 teilweise in die Bauteile 81, 82 eindringen. Hierdurch entsteht beim Fügevorgang eine Kraft zwischen den Bauteilen 81, 82, welche Kraft über die Schichtanordnung 10 übertragen wird.

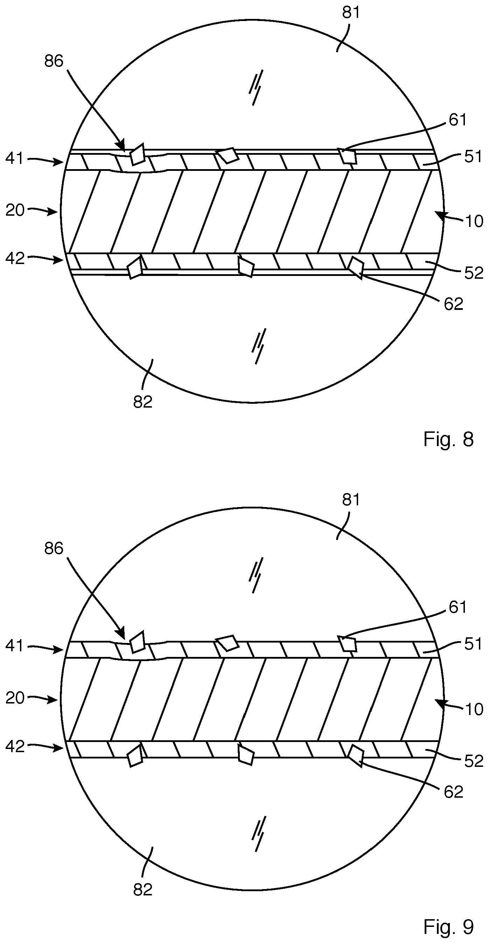

**Fig. 8** zeigt den Fügevorgang von Fig. 6 und Fig. 7, wobei die Bauteile 81, 82 weiter zusammengepresst wurden. Es ist zu sehen, dass in einem Bereich 86 eine Verformung des Metallsubstrats 20 und/oder der metallischen Bindephase 51, 52 statt gefunden hat. Durch diese Verformung wird ermöglicht, dass weitere Hartstoffpartikel 61, 62 in die Bauteile 81, 82 eindringen, und dies führt zu einer Erhöhung der Durchrutschfestigkeit, wenn die Bauteile 81, 82 bspw. zur Übertragung eines Drehmoments ausgebildet sind. Dadurch, dass die Schichtanordnung 10 vergleichsweise weich ist gegenüber einem Federstahl, kann sie sich besser an Unebenheiten der zu fügenden Bauteile 81, 82 anpassen und hierdurch zu einer gleichmäßigeren Verbindung der Bauteile 81, 82 führen.

**Fig. 9** zeigt den Fügevorgang von Fig. 6 bis Fig. 8, wobei die Bauteile 81, 82 so weit zusammengepresst sind, dass der Fügespalt zwischen den Bauteilen und der Schichtanordnung 10 zumindest lokal nicht mehr vorhanden ist, bevorzugt über die gesamte Kontaktfläche.

Ein Fügespalt kann dazu führen, dass Flüssigkeit unter dem Effekt der Kapillarwirkung in den Bereich zwischen den Bauteilen 81 bzw. 82 und der Schichtanordnung gelangt und zu Korrosion führt. Die Verringerung des Fügespalts wird durch die Duktilität des vergleichsweise weichen Metallsubstrats 20 begünstigt, und dies verringert die Korrosionsgefahr. Substrate aus Federstahl sind im Gegensatz hierzu deutlich weniger duktil, und der Fügespalt ist bei einem Substrat aus Federstahl im Normalfall größer. Auch Substrate aus organischem Material haben schlechtere Eigenschaften als Metallsubstrate aus Nickel, Kupfer oder deren Legierungen, und bei Substraten aus organischem Material kann es bei größeren Unebenheiten zu einem Scherbruch kommen.

Die beschriebene Flächenpressung hat insbesondere folgende positive Effekte:
a) Die Hartstoffpartikel werden in die Bauteile 81, 82 eingepresst und erhöhen hierdurch den Reibwert (Mindestflächenpressung).
b) Die Schichtanordnung kann sich an die Form der Bauteile 81, 82 zumindest teilweise anpassen, und hierdurch wird die Kontaktfläche erhöht.

Eine geeignete Höhe der Flächenpressung kann in Abhängigkeit von den jeweiligen Materialien der Bauteile 81, 82 und deren Größe festgelegt werden.

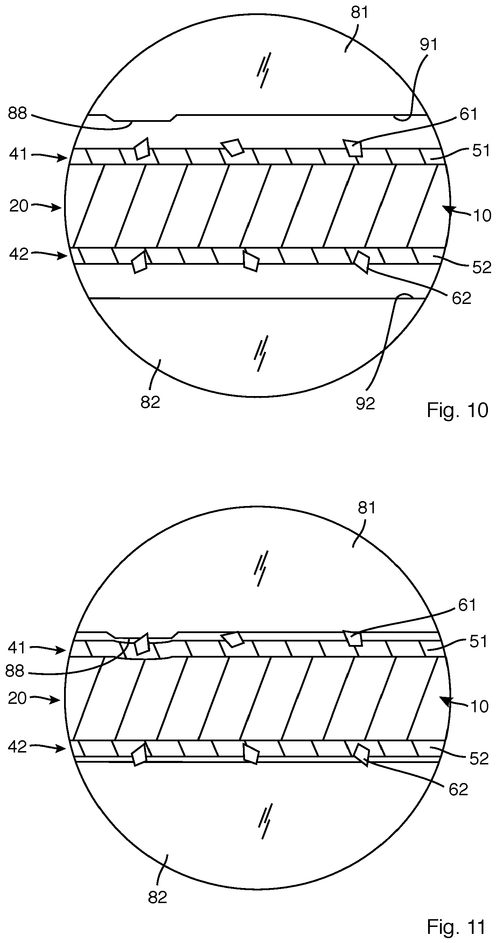

**Fig. 10** zeigt ein weiteres Ausführungsbeispiel zweier zu fügender Bauteile 81, 82, wobei das Bauteil 81 in einem Bereich 88 eine Unebenheit in Form eines flächigen Vorsprungs aufweist.

**Fig. 11** zeigt die Bauteile 81, 82 nach dem Fügen. Es ist zu sehen, dass im Bereich des Vorsprungs 88 eine Verformung der Schichtanordnung 10 im Bereich der metallischen Bindephase 51 bzw. im Bereich des Substrats 20 auftritt, und hierdurch können die weiteren Hartstoffpartikel 61 besser in Kontakt mit dem Bauteil 81 treten.

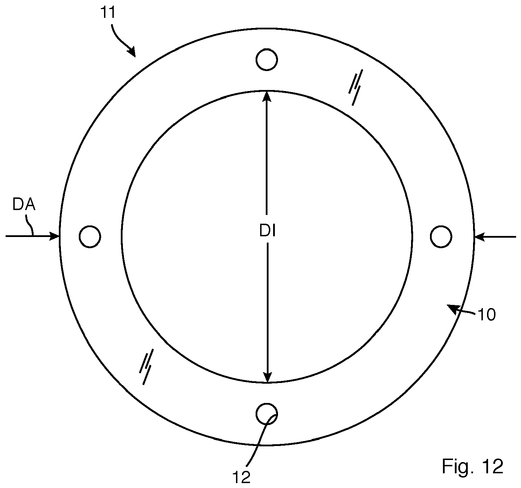

**Fig. 12** zeigt eine ringförmige Scheibe 11, welche aus der Schichtanordnung 10 hergestellt ist. Die Scheibe 11 hat in einem durchgeführten Versuch einen Außendurchmesser DA = 160 mm und einen Innendurchmesser DI = 110 mm.

Zudem sind vier Aussparungen 12 vorgesehen, durch welche sich bei der Montage Schrauben erstrecken können. Die Scheibe 11 hat bspw. eine Dicke von 6 mm.

Zu Versuchszwecken wurde auch eine Scheibe 11 mit einem Außendurchmesser DA = 180 mm, einem Innendurchmesser DI = 120 mm, einer Dicke von 8 mm und vier Aussparungen 12 hergestellt.

In einem weiteren Versuch wurde eine Scheibe 11 mit einem Außendurchmesser DA = 170 mm, einem Innendurchmesser DI = 150 mm, zwölf Aussparungen 12 und einer Dicke von 0,1 mm ± 0,02 mm hergestellt.

Die Scheiben 11 waren im Versuch gut zu handhaben, und sie haben als reibwerterhöhende Scheiben 11 entsprechend den gewählten Anforderungen funktioniert.

Die Schichtanordnung 10 kann bevorzugt in Form von Platten oder aber in Form von aufgerollter Bandware (ähnlich einer Klebeband-Rolle) hergestellt werden, und die Verbindungselemente bzw. Scheiben 11 können bevorzugt durch eines der folgenden Verfahren aus der Schichtanordnung 10 hergestellt werden.
- Stanzen mit einer Stanze unter Verwendung eines Stanzmessers bzw. einer Stanzform
- Schneiden mit einer Wasserstrahlschneidemaschine durch einen Wasserstrahl
- Schneiden mit einem Laser durch einen Laserstrahl

Naturgemäß sind im Rahmen der vorliegenden Erfindung vielfältige Abwandlungen und Modifikationen möglich.

## Patentansprüche

1. Schichtanordnung (10) zur reibungserhöhenden Verbindung von zu fügenden Bauteilen (81, 82), welche aufweist:
Ein Metallsubstrat (20) aus
- Kupfer oder
- Nickel oder
- einer Nickellegierung mit dem Basismetall Nickel und mindestens einem weiteren Legierungselement;
und mindestens zwei mit dem Metallsubstrat (20) verbundene Funktionsschichten (41, 42) mit einer metallischen Bindephase (51, 52) und in der metallischen Bindephase (51, 52) fixierten Hartstoffpartikeln (61, 62),
wobei die Dicke des Metallsubstrats mindestens 50 % der Dicke der gesamten Schichtanordnung (10) beträgt.

2. Schichtanordnung (10) nach Anspruch 1, bei welcher das Metallsubstrat (20) einen Werkstoff mit einer Vickershärte aufweist, welche im Bereich 150 HV 0,1 bis 900 HV 0,1 liegt, bevorzugt im Bereich 180 HV 0,1 bis 650 HV 0,1, weiter bevorzugt im Bereich 190 HV 0,1 bis 500 HV 0,1.

3. Schichtanordnung nach Anspruch 1 oder 2, bei welcher das Metallsubstrat (20) aus Kupfer besteht, und welches Metallsubstrat (20) eine Vickershärte aufweist, welche im Bereich 150 HV 0,1 bis 250 HV 0,1 liegt.

4. Schichtanordnung nach Anspruch 1 oder 2, bei welcher das Metallsubstrat (20) aus Nickel oder aus einer Nickellegierung besteht, und welches Metallsubstrat (20) eine Vickershärte aufweist, welche im Bereich 180 HV 0,1 bis 900 HV 0,1 liegt.

5. Schichtanordnung (10) nach einem der vorhergehenden Ansprüche, bei welcher das Metallsubstrat (20) eine Dicke (22) aufweist, welche mindestens 10 *µ*m beträgt, bevorzugt mindesten 15 *µ*m, weiter bevorzugt mindestens 50 *µ*m, weiter bevorzugt mindestens 80 *µ*m und besonders bevorzugt mindestens 100 *µ*m.

6. Schichtanordnung (10) nach einem der vorhergehenden Ansprüche, bei welcher das Metallsubstrat (20) eine Dicke (22) aufweist, welche höchstens 40 mm beträgt, bevorzugt höchstens 15 mm, weiter bevorzugt höchstens 10 mm, weiter bevorzugt höchstens 1.000 *µ*m, weiter bevorzugt höchstens 500 *µ*m.

7. Schichtanordnung (10) nach einem der vorhergehenden Ansprüche, bei welcher die Hartstoffpartikel (61, 62) zumindest teilweise aus der metallischen Bindephase (51, 52) hervorstehen, und welche Schichtanordnung (10) ohne den hervorstehenden Bereich der Hartstoffpartikel (61, 62) eine Dicke (24) aufweist, welche im Bereich 15 *µ*m bis 40 mm liegt, bevorzugt im Bereich 15 *µ*m bis 15 mm.

8. Schichtanordnung (10) nach einem der vorhergehenden Ansprüche, bei welcher das Basismetall des Metallsubstrats (20) einen Pauling-Wert der Elektronegativität aufweist, welcher im Bereich 1,85 bis 2,20 liegt, bevorzugt im Bereich 1,87 bis 2,00.

9. Schichtanordnung (10) nach einem der vorhergehenden Ansprüche, bei welcher die metallische Bindephase (51, 52) aus einem Werkstoff ausgebildet ist, welcher ausgewählt ist aus der Gruppe bestehend aus
- Nickel,
- Nickellegierung,
- Kupfer,
- Kupferlegierung,
- Zinn, und
- Zinnlegierung.

10. Schichtanordnung (10) nach einem der vorhergehenden Ansprüche, bei welcher die metallische Bindephase (51, 52) eine Nickellegierung aufweist, welche als Bestandteile Nickel und Phosphor enthält.

11. Schichtanordnung (10) nach einem der vorhergehenden Ansprüche, bei welcher die Dicke des Metallsubstrats mindestens 60 % der Dicke der gesamten Schichtanordnung beträgt, weiter bevorzugt mindestens 70 %.

12. Schichtanordnung nach einem der vorhergehenden Ansprüche, bei welcher mindestens eine der mindestens zwei mit dem Metallsubstrat (20) verbundenen Funktionsschichten (41, 42) direkt in Kontakt mit dem Metallsubstrat (20) ist.

13. Anordnung mit einem ersten Bauteil (81), einem zweiten Bauteil (82) und einer Schichtanordnung (10) nach einem der vorhergehenden Ansprüche, bei welcher Anordnung das erste Bauteil (81) über die Schichtanordnung (10) mit dem zweiten Bauteil (82) verbunden ist.

14. Anordnung nach Anspruch 13, bei welcher eine erste Fläche (91) des ersten Bauteils (81) an der Schichtanordnung (10) anliegt, bei welcher eine zweite Fläche (92) des zweiten Bauteils (82) an der Schichtanordnung (10) anliegt, und bei welcher die der ersten Fläche (91) zugeordnete Bindephase (51) eine geringere Vickershärte hat als der Werkstoff der ersten Fläche (91).

15. Anordnung nach Anspruch 13 oder 14, bei welchem die Duktilität des Werkstoffs des Metallsubstrats (20) größer ist als die Duktilität des Werkstoffs des ersten Bauteils (81) an der ersten Fläche (91).

## Claims

1. A layer arrangement (10) for friction-increasing connection of components (81, 82) to be joined, which has:
A metal substrate (20) made of
- copper or
- nickel or
- a nickel alloy with the base metal nickel and at least one further alloying element;
and at least two functional layers (41, 42) connected to the metal substrate (20), with a metallic binding phase (51, 52) and hard material particles (61, 62) fixed in the metallic binding phase (51, 52), wherein the thickness of the metal substrate is at least 50% of the thickness of the entire layer arrangement (10).

2. The layer arrangement (10) according to claim 1, in which the metal substrate (20) has a material with a Vickers hardness which is in the range 150 HV 0.1 to 900 HV 0.1, preferably in the range 180 HV 0.1 to 650 HV 0.1, more preferably in the range 190 HV 0.1 to 500 HV 0.1.

3. The layer arrangement according to claim 1 or 2, in which the metal substrate (20) consists of copper, and which metal substrate (20) has a Vickers hardness which is in the range 150 HV 0.1 to 250 HV 0.1.

4. The layer arrangement according to claim 1 or 2, in which the metal substrate (20) consists of nickel or a nickel alloy, and which metal substrate (20) has a Vickers hardness which is in the range 180 HV 0.1 to 900 HV 0.1.

5. The layer arrangement (10) according to one of the preceding claims, in which the metal substrate (20) has a thickness (22) which is at least 10 µm, preferably at least 15 µm, further preferably at least 50 µm, further preferably at least 80 µm, and particularly preferably at least 100 µm.

6. The layer arrangement (10) according to one of the preceding claims, in which the metal substrate (20) has a thickness (22) which is at most 40 mm, preferably at most 15 mm, further preferably at most 10 mm, further preferably at most 1,000 µm, further preferably at most 500 µm.

7. The layer arrangement (10) according to one of the preceding claims, in which the hard material particles (61, 62) at least partially protrude from the metallic binding phase (51, 52), and which layer arrangement (10) without the protruding region of the hard material particles (61, 62) has a thickness (24) which is in the range 15 µm to 40 mm, preferably in the range 15 µm to 15 mm.

8. The layer arrangement (10) according to one of the preceding claims, in which the base metal of the metal substrate (20) has a Pauling value of electronegativity which is in the range 1.85 to 2.20, preferably in the range 1.87 to 2.00.

9. The layer arrangement (10) according to one of the preceding claims, in which the metallic binding phase (51, 52) is designed from a material selected from the group consisting of
- nickel,
- nickel alloy,
- copper,
- copper alloy,
- tin, and
- tin alloy.

10. The layer arrangement (10) according to one of the preceding claims, in which the metallic binding phase (51, 52) has a nickel alloy containing nickel and phosphorus as constituents.

11. The layer arrangement (10) according to one of the preceding claims, in which the thickness of the metal substrate is at least 60% of the thickness of the entire layer arrangement, further preferably at least 70%.

12. The layer arrangement according to one of the preceding claims, in which at least one of the at least two functional layers (41, 42) connected to the metal substrate (20) is directly in contact with the metal substrate (20).

13. An arrangement with a first component (81), a second component (82) and a layer arrangement (10) according to one of the preceding claims, in which arrangement the first component (81) is connected to the second component (82) via the layer arrangement (10).

14. The arrangement according to claim 13, in which a first surface (91) of the first component (81) abuts the layer arrangement (10), in which a second surface (92) of the second component (82) abuts the layer arrangement (10), and in which the binding phase (51) assigned to the first surface (91) has a lower Vickers hardness than the material of the first surface (91).

15. The arrangement according to claim 13 or 14, in which the ductility of the material of the metal substrate (20) is greater than the ductility of the material of the first component (81) at the first surface (91).

## Revendications

1. Agencement en couches (10) pour la liaison à augmentation de friction de composants (81, 82) à assembler, qui présente :
un substrat métallique (20)
- en cuivre ou
- en nickel ou
- en alliage de nickel constitué principalement de nickel et contenant au moins un autre élément d'alliage ;
et au moins deux couches fonctionnelles (41, 42) liées au substrat métallique (20) au moyen d'une phase de liaison métallique (51, 52) et de particules de matériau dur (61, 62) fixées dans la phase de liaison métallique (51, 52),
l'épaisseur du substrat métallique représentant au moins 50 % de l'épaisseur du système de couche (10).

2. Agencement en couches (10) selon la revendication 1, dans lequel le substrat métallique (20) présente un matériau dont la dureté Vickers se situe dans la plage de 150 HV 0,1 à 900 HV 0,1, de préférence dans la plage de 180 HV 0,1 à 650 HV 0,1, de préférence encore dans la plage de 190 HV 0,1 à 500 HV 0,1.

3. Agencement en couches selon la revendication 1 ou 2, dans lequel le substrat métallique (20) est constitué de cuivre, et lequel substrat métallique (20) présente une dureté Vickers qui se situe dans la plage de 150 HV 0,1 à 250 HV 0,1.

4. Agencement en couches selon la revendication 1 ou 2, dans lequel le substrat métallique (20) est constitué de nickel ou d'un alliage de nickel, et lequel substrat métallique (20) présente une dureté Vickers qui se situe dans la plage de 180 HV 0,1 à 900 HV 0,1.

5. Agencement en couches (10) selon l'une des revendications précédentes, dans lequel le substrat métallique (20) présente une épaisseur (22) qui est d'au moins 10 µm, de préférence d'au moins 15 µm, de préférence encore d'au moins 50 µm, de préférence encore d'au moins 80 µm et de manière particulièrement préférée d'au moins 100 µm.

6. Agencement en couches (10) selon l'une des revendications précédentes, dans lequel le substrat métallique (20) présente une épaisseur (22) qui est de 40 mm au maximum, de préférence de 15 mm au maximum, de préférence encore de 10 mm au maximum, de préférence encore de 1 000 µm au maximum, de préférence encore de 500 µm au maximum.

7. Agencement en couches (10) selon l'une des revendications précédentes, dans lequel les particules de matériau dur (61, 62) font au moins partiellement saillie de la phase de liaison métallique (51, 52), et lequel agencement en couches (10) présente, sans la zone saillante des particules de matériau dur (61, 62), une épaisseur (24) qui se situe dans la plage de 15 µm à 40 mm, de préférence dans la plage de 15 µm à 15 mm.

8. Agencement en couches (10) selon l'une des revendications précédentes, dans lequel l'électronégativité du métal de base du substrat métallique (20) se situe dans la plage de 1,85 à 2,20, de préférence dans la plage de 1,87 à 2,00 à l'échelle de Pauling.

9. Agencement en couches (10) selon l'une des revendications précédentes, dans lequel la phase de liaison métallique (51, 52) est formée d'un matériau choisi dans le groupe constitué de
- nickel,
- alliage de nickel,
- cuivre,
- alliage de cuivre,
- étain et
- alliage d'étain.

10. Agencement en couches (10) selon l'une des revendications précédentes, dans lequel la phase de liaison métallique (51, 52) présente un alliage de nickel qui comprend comme composants du nickel et du phosphore.

11. Agencement en couches (10) selon l'une des revendications précédentes, dans lequel l'épaisseur du substrat métallique représente au moins 60 %, de préférence encore au moins 70 % de l'épaisseur de tout l'agencement en couches.

12. Agencement en couches selon l'une des revendications précédentes, dans lequel au moins une des au moins deux couches fonctionnelles (41, 42) liées au substrat métallique (20) est directement en contact avec le substrat métallique (20).

13. Agencement comprenant un premier composant (81), un second composant (82) et un agencement en couches (10) selon l'une des revendications précédentes, le premier composant (81) étant relié au second composant (82) par l'intermédiaire de l'agencement en couches (10).

14. Agencement selon la revendication 13, dans lequel une première surface (91) du premier composant (81) est en contact avec l'agencement en couches (10), une seconde surface (92) du second composant (82) est en contact avec l'agencement en couches (10) et la phase de liaison (51) associée à la première surface (91) a une dureté Vickers inférieure à celle du matériau de la première surface (91).

15. Agencement selon la revendication 13 ou 14, dans lequel la ductilité du matériau du substrat métallique (20) est supérieure à la ductilité du matériau du premier composant (81) au niveau de la première surface (91).
